# EUROPEAN PATENT SPECIFICATION

(11) **EP 0 880 205 B1**
(45) Date of publication and mention of the grant of the patent: **19.10.2005**
(21) Application number: 98303510.6
(22) Date of filing: 05.05.1998
(51) Int. Cl.: H01R 35/00, H01R 35/02, B60R 16/02

(54) **Rotary connector mounting structure**
Montagestruktur für Drehverbinder
Structure de montage pour connecteur rotatif

(30) Priority: 19.05.1997 JP 12862297
(43) Date of publication of application: 25.11.1998
(73) Proprietor: ALPS ELECTRIC CO., LTD., Ota-ku Tokyo 145 (JP)
(72) Inventor: Mitsuzuka, Katsuya, Tome-gun, Miyagi-ken (JP); Takahashi, Atsuo, Kurokawa-gun, Miyagi-ken (JP); Kato, Hironori, Sendai-shi, Miyagi-ken (JP); Furuichi, Kimihiro, Furukawa-shi, Miyagi-ken (JP); Sano, Yukari, Toda-gun, Miyagi-ken (JP)
(74) Representative: Kensett, John Hinton

(56) References cited:
- EP-A- 0 659 614
- EP-A- 0 694 431
- EP-A- 0 771 693

## Description

The present invention relates to a structure for mounting a rotary connector and a combination switch, the rotary connector being used as connector means for connecting an electric device such as, for example, an air bag inflator carried on a steering wheel to the body side of a vehicle, and the combination switch having incorporated therein a variety of switch units, including a headlight switch and a wiper switch.

A rotary connector substantially comprises a pair of housings connected together in a relatively rotatable manner and a flexible cable which is coiled within an annular receptacle space defined between both housing. Both ends of the flexible cable are fixed respectively to both housings and are drawn out electrically to the exterior. One of the paired housings is used as a movable housing and the other used as a stationary housing. When the movable housing is rotated forward or reverse, the flexible cable is wound or unwound in accordance with the rotating direction of the movable housing. The rotary connector thus constructed is incorporated in a steering device of an automobile and is used as connector means for electrical connection between the column side and the steering wheel side. In this case, it is necessary that the stationary housing of the rotary connector be mounted to a stator member on the column side.

Heretofore, as such a type of the rotary connector mounting structure there has been adopted, for example, the rotary connector mounting structure in which a combination switch having incorporated therein a variety of switch units, including a headlight switch and a wiper switch, is fixed to the column side and a stationary housing of the rotary connector is mounted with bolts or the like to a casing which forms a shell of the combination switch. According to this mounting structure, a movable housing is secured to the back of a steering wheel using connecting pins or the like, and both ends of a flexible cable are connected respectively to the combination switch and an external connector provided on the steering wheel side. According to this rotary connector mounting structure, the movable housing rotates either forward or reverse in interlock with rotation of the steering wheel and electric devices mounted on the steering wheel such as an air bag inflator and a horn switch are kept connected to the column side through the flexible cable in the rotary connector.

Usually, a canceling mechanism for resetting an operating lever automatically from a right or left operating position to a center position is attached to the headlight switch incorporated in the combination switch. According to a known method, the canceling mechanism is operated by utilizing a rotational force of the movable housing. In this case, if canceling lugs are formed on part of the movable housing projecting from the bottom of the stationary housing and a canceling lever of the canceling mechanism is allowed to face a rotational region of the canceling lugs, then upon rotation of the steering wheel to its neutral position, the canceling lever is operated by the canceling lugs of the movable housing which rotates in interlock with the steering wheel, whereby the operating lever can be reset automatically to the center position.

As known well, however, it is not that the stationary housing and the movable housing in the rotary connector are closely connected together. Usually, the movable housing is connected to the stationary housing rotatably through a slight clearance in a guide hole of the stationary housing. Dimensional errors and mounting errors of various portions are absorbed by the clearance. Therefore, with the station housing attached to a casing of the combination switch, there is a fear that the movable housing may rotate while tilting within the range of the above clearance with respect to the axis thereof. In the case where cancelling lugs are formed on the movable housing portion projecting from the stationary housing, as mentioned above, the cancelling lugs and the cancelling lever are apt to be displaced relative to each other. Particularly, if the cancelling lugs are formed at positions away from the bottom of the stationary housing, the amount of tilting of the cancelling lugs becomes larger, so that the cancelling lever becomes unable to operate.

EP-A-0771693 discloses a rotary connector mounting structure comprising: a rotary connector including a stationary housing and a movable housing connected rotatably to the stationary housing; and a combination switch to which an operating lever having a cancelling mechanism is attached; said stationary housing being mounted to a casing serving as a shell of said combination switch, a part of said movable housing is projected outward from the bottom of said stationary housing to form a projecting portion, a cancelling lug for operating said cancelling mechanism formed on the projecting portion of the movable housing. There remains a problem of tilting with such a system.

According to the present invention there is provided a rotary connector mounting structure as claimed in claim 1.

The cancelling lugs may be provided at respective ends of a lug portion (26) formed on the projecting portion.

Embodiments of the invention will now be described, by way of example only, with reference to the accompanying drawings, in which:
FIG. 1 is a plan view showing a state in which a rotary connector embodying the present invention has been attached to a combination switch;
FIG. 2 is a sectional view taken in one direction of FIG. 1; and
FIG. 3 is a sectional view taken on another direction of FIG. 1.

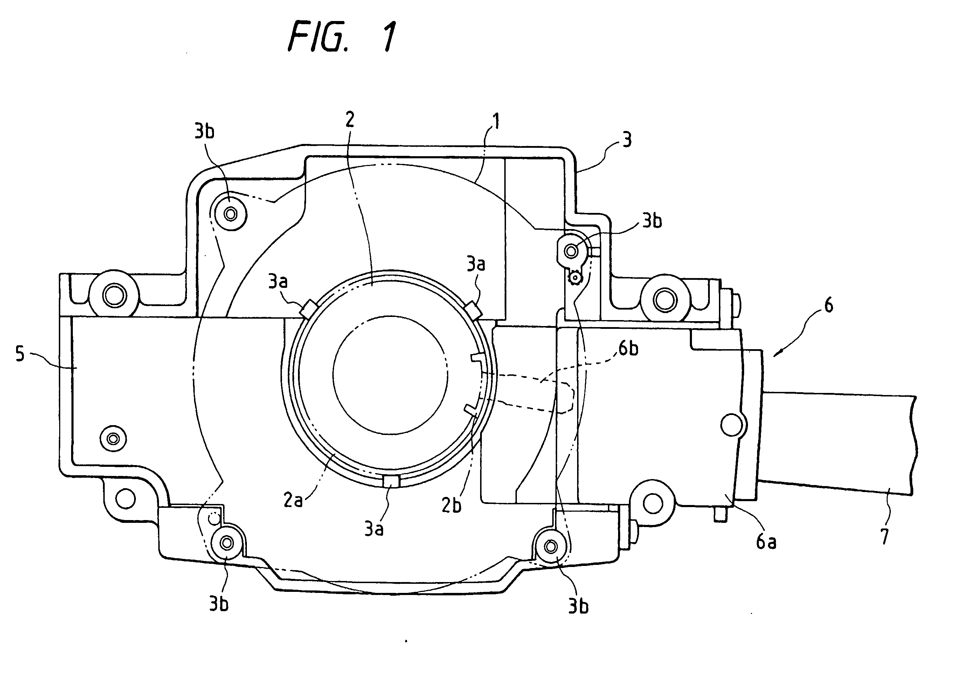

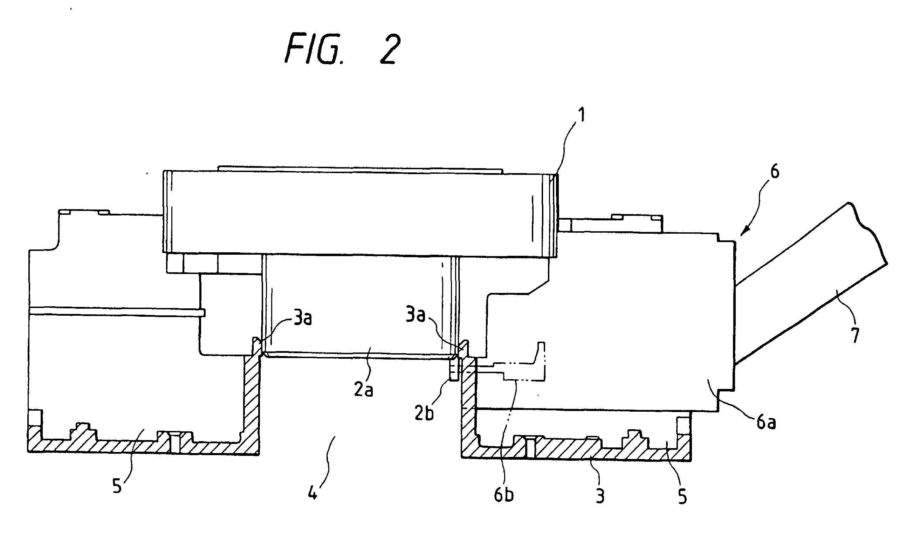

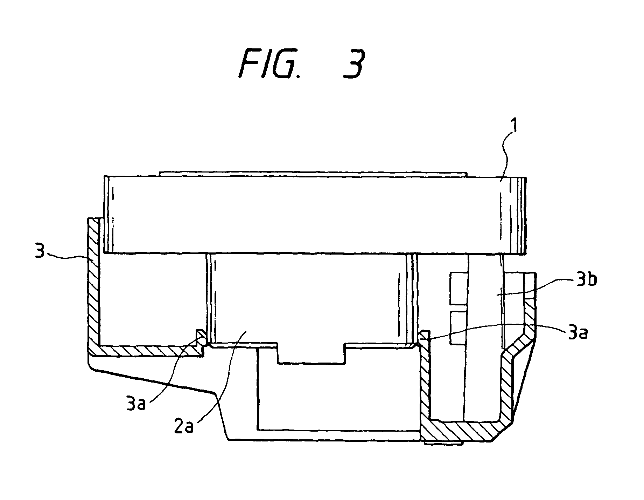

An embodiment of the present invention will be described in detail hereinunder with reference to the accompanying drawings, in which FIG. 1 is a plan view showing a state in which a rotary connector embodying the invention has been attached to a combination switch, FIG. 2 is a sectional view taken in one direction of FIG. 1, and FIG. 3 is a sectional view taken in another direction of FIG. 1.

As shown in these figures, the rotary connector embodying the invention comprises a stationary housing 1 having an outer cylindrical portion and a movable housing 2 having an inner cylindrical portion. Between the outer and inner cylindrical portions of the housings 1 and 2 is formed an annular receptacle space, in which a flat cable (not shown) is coiled in a spiral shape for example. The movable housing 2 is connected rotatably to guide holes (not shown) which are centrally formed in the top and bottom surfaces of the stationary housing 1. The housings 1 and 2 are connected together through a slight clearance so that dimensional errors and mounting errors of various portions can be absorbed by the clearance. The movable housing 2 has a cylindrical portion 2a projecting outwards from the bottom of the stationary housing 1. On the tip of the cylindrical portion 2a are formed canceling lugs 2b for actuating a canceling mechanism which will be described later. Although the cylindrical portion 2a may be formed integrally with the movable housing 2 by molding, it may be formed as a separate component to be rendered integral with the movable housing 2 by utilizing a snap action for example.

A combination switch related to this embodiment has a casing 3 serving as a shell of the switch. The casing 3 is formed with three guide portions 3a and a plurality of support rods 3b. The guide portions 3a are positioned on the same circle at equal intervals of about 120 degrees. Inside the guide portions 3a is formed an insertion hole 4, and holding portions 5 are formed right and left in an opposed relation to each other through the insertion hole 4. A base portion 6a of a headlight switch 6 is fixed to one holding portion 5, and an operating lever 7 for performing right and left winker motions and passing motion is supported by the base portion 6a. Within the base portion 6a are incorporated known mechanisms such as a locking mechanism for locking the operating lever to an operating position and a canceling mechanism for resetting the operating lever 7 automatically from the operating position to a center position. A canceling lever 6b as a component of the canceling mechanism projects into the insertion hole 4. To the other holding portion 5 is mounted a wiper switch (not shown).

When the rotary connector constructed as above is to be mounted to a steering device, first the casing 3 of the combination switch is fixed to a column cover for example and thereafter the stationary housing 1 is fixed with bolts to the support rods 3b of the casing 3. At this time, the lower part of the cylindrical body 2a of the movable housing 2 is fitted inside the guide portions 3a, and the canceling lugs 2b formed at the lower end of the cylindrical portion 2a are opposed to the tip of the canceling lever 6b in the interior of the insertion hole 4. As a result, within the range of the foregoing clearance, the movable housing 2 can move the direction perpendicularly to a rotary shaft, but the cylindrical portion 2a projecting from the bottom of the stationary housing 1 will not tilt largely with respect to the rotary shaft because the lower part of the cylindrical portion 2a is restricted its position by the guide portions 3a, and hence the canceling lugs 2b and the canceling lever 6b are positioned accurately relative to each other. Subsequently, a steering wheel (not shown) is fixed to a steering shaft, and the back of the steering wheel is secured to the movable housing 2. Further, both ends of a flat cable (not shown) received within the rotary connector are electrically connected respectively to the combination switch and the steering wheel. As a result, an electric device such as an air bag inflator mounted on the steering wheel is connected to the combination switch through the flat cable in the rotary connector.

In using the rotary connector, when the steering wheel is turned clockwise or counterclockwise, the resulting rotational force is transmitted to the movable housing 2, so that the flat cable is wound or rewound according to a rotating direction of the movable housing 2. Moreover, the canceling lugs 2b rotate within the insertion hole 4 in interlock with the movable housing 2, so that when the steering wheel is turned to its neutral position, the canceling lugs 2b actuate the canceling lever 6b and the operating lever 7 is reset automatically from the operating position to the center position. In this case, as noted previously, a required clearance between the stationary housing 1 and the movable housing 2 is ensured and a large tilting motion of the movable housing 2, which is ascribable to the clearance, is prevented by the guide portions 3a. Therefore, not only dimensional errors and mounting errors of various portions can be absorbed by the clearance, but also the canceling lever 6b can be surely operated by the canceling lugs 2b.

The present invention, which has been described above by way of an embodiment thereof, brings about the following effect.

In the rotary connector mounting structure of the present invention, part of the movable housing as a constituent of the rotary connector is projected outward from the bottom of the stationary housing, canceling lugs for actuating a canceling mechanism are formed on the projecting portion, and a casing of a combination switch with the stationary housing attached thereto is formed with guide portions which restrict the position of the projecting portion of the movable housing between the bottom of the stationary housing and the canceling lugs. According to this construction, a required clearance is ensured between the stationary housing and the movable housing, and a large tilting of the movable housing caused by the clearance is prevented by the guide portions of the combination switch casing. Therefore, even if the canceling lugs are formed at positions away from, the bottom of the stationary housing, it is possible to surely operate the canceling mechanism.

## Claims

1. A rotary connector mounting structure comprising: a rotary connector including a stationary housing (1) and a movable housing (2) connected rotatably to the stationary housing; and a combination switch to which an operating lever (7) having a cancelling mechanism is attached; said stationary housing being mounted to a casing (3) serving as a shell of said combination switch, a part of said movable housing (2) is projected outward from the bottom of said stationary housing (1) to form a projecting portion (2a), cancelling lugs (2b) for operating said cancelling mechanism formed on the projecting portion of the movable housing (2), and **characterised in that** said casing (3) is provided with a plurality of guide portions (3a) for largely restricting the projecting portion (2a) of said movable housing in tilting with respect to the axis of rotation of the movable housing, and **in that** when a cancelling lug (2b) actuates a cancelling lever (6b), a large tilting motion of the movable housing (2), which is ascribable to a clearance between the stationary housing (1) and the movable housing (2), is prevented by the guide portions (3a).

2. The rotary connector mounting structure according to claim 1, **characterized in that** said guide portion (3a) is formed along said projecting portion.

3. The rotary connector mounting structure according to claim 2, **characterized in that** three guide portions (3a) are formed at equal intervals along the circumferential direction of said projecting portion.

4. The rotary connector mounting structure according to claim 1, **characterized in that** said projecting portion of the movable housing (2) is a cylindrical portion (2a).

5. The rotary connector mounting structure according to claim 4, **characterized in that** said cylindrical portion (2a) is formed integrally with said movable housing (2) by molding.

6. The rotary connector mounting structure according to claim 4, **characterized in that** said cylindrical portion (2a) is snapped to said movable housing (2).

7. The rotary connector mounting structure according to any of claims 4 to 6, **characterized in that** said three guide portions guides said cylindrical portion (2a).

8. The rotary connector mounting structure according to any preceding claim, wherein the cancelling lugs are provided at respective ends of a lug portion (26) formed on the projecting portion.

## Patentansprüche

1. Drehverbinder-Befestigungskonstruktion, aufweisend:
einen Drehverbinder mit einem stationären Gehäuseteil (1) und einem beweglichen Gehäuseteil (2), das mit dem stationären Gehäuseteil drehbar verbunden ist; und
einen Kombinationsschalter, an dem ein Betätigungshebel (7) mit einem Rückstellmechanismus angebracht ist;
wobei das stationäre Gehäuseteil an einer Gehäuseeinrichtung (3) angebracht ist, die als Umhüllung des Kombinationsschalters dient,
wobei ein Teil des beweglichen Gehäuseteils (2) aus dem Boden des stationären Gehäuseteils (1) nach außen herausragt und einen vorstehenden Bereich (2a) bildet, und
wobei Rückstellansätze (2b) zum Betätigen des Rückstellmechanismus an dem hervorstehenden Bereich des beweglichen Gehäuseteils (2) gebildet sind,
**dadurch gekennzeichnet, dass** die Gehäuseeinrichtung (3) mit einer Mehrzahl von Führungsbereichen (3a) versehen ist, um den hervorstehenden Bereich (2a) des beweglichen Gehäuseteils an einer Kippbewegung in Bezug auf die Drehachse des beweglichen Gehäuseteils weitgehend zu hindern, und dass dann, wenn ein Rückstellansatz (2b) einen Rückstellhebel (6b) betätigt, eine große Kippbewegung des beweglichen Gehäuseteils (2), die auf einen Freiraum zwischen dem stationären Gehäuseteil (1) und dem beweglichen Gehäuseteil (2) zurückzuführen ist, durch die Führungsbereiche (3a) verhindert wird.

2. Drehverbinder-Befestigungskonstruktion nach Anspruch 1,
**dadurch gekennzeichnet, dass** der Führungsbereich (3a) längs des hervorstehenden Bereichs gebildet ist.

3. Drehverbinder-Befestigungskonstruktion nach Anspruch 2,
**dadurch gekennzeichnet, dass** drei Führungsbereiche (3a) in gleichmäßigen Intervallen entlang der Umfangsrichtung des hervorstehenden Bereichs gebildet sind.

4. Drehverbinder-Befestigungskonstruktion nach Anspruch 1,
**dadurch gekennzeichnet, dass** es sich bei dem hervorstehenden Bereich des beweglichen Gehäuseteils (2) um einen zylindrischen Bereich (2a) handelt.

5. Drehverbinder-Befestigungskonstruktion nach Anspruch 4,
**dadurch gekennzeichnet, dass** der zylindrische Bereich (2a) durch Formen in integraler Weise mit dem beweglichen Gehäuseteil (2) ausgebildet ist.

6. Drehverbinder-Befestigungskonstruktion nach Anspruch 4,
**dadurch gekennzeichnet, dass** der zylindrische Bereich (2a) durch Schnappverbindung an dem beweglichen Gehäuseteil (2) angebracht ist.

7. Drehverbinder-Befestigungskonstruktion nach einem der Ansprüche 4 bis 6,
**dadurch gekennzeichnet, dass** die drei Führungsbereiche den zylindrischen Bereich (2a) führen.

8. Drehverbinder-Befestigungskonstruktion nach einem der vorausgehenden Ansprüche,
wobei die Rückstellansätze an den Enden eines an dem hervorstehenden Bereich ausgebildeten Ansatzbereichs (2b) vorgesehen sind.

## Revendications

1. Une structure de montage pour un connecteur rotatif consistant en: un connecteur rotatif comprenant un logement stationnaire (1) et un logement mobile (2) connecté, de façon à pouvoir tourner, au logement stationnaire; et un commutateur à combinaisons auquel est attaché un levier de manoeuvre (7) ayant un mécanisme d'annulation y attaché; ce logement stationnaire étant monté dans un carter (3) servant de coque pour le commutateur à combinaisons, une partie de ce logement mobile (2) projetant du bas du logement stationnaire (1) vers l'extérieur pour former une portion (2a) saillante, et des pattes (2b) pour mettre en marche le mécanisme d'annulation, formées sur la portion saillante située sur le logement mobile (2), et
**caractérisée en ce que** ce logement (3) est pourvu d'un nombre de portions de guidage (3a) pour limiter d'une façon générale le mouvement de bascule de la portion saillante (2a) du logement mobile par rapport à l'axe de rotation du logement mobile, et **en ce que**, quand une patte d'annulation (2b) déclenche un levier d'annulation (6b), un large mouvement de bascule du logement mobile (2), qui est dû à l'espace entre le logement stationnaire (1) et le logement mobile (2), est empêché par les portions de guidage (3a).

2. La structure de montage pour connecteur rotatif selon la revendication 1, **caractérisé en ce que** la portion de guidage (3a) est formée le long de la portion saillante.

3. La structure de montage pour connecteur rotatif selon la revendication 2, **caractérisée en ce que** trois portions de guidage (3a) sont formées à des intervalles égaux le long de la direction circonférentielle de cette portion saillante.

4. La structure de montage pour connecteur rotatif selon la revendication 1, **caractérisée en ce que** la portion du logement mobile (2) saillante est une portion cylindrique (2a).

5. La structure de montage pour connecteur rotatif selon la revendication 4, **caractérisée en ce que** la portion cylindrique (2a) est formée intégralement avec le logement mobile (2) par moulage.

6. La structure de montage pour connecteur rotatif selon la revendication 4, **caractérisée en ce que** la portion cylindrique (2a) s'enclenche avec le logement mobile (2).

7. La structure de montage pour connecteur rotatif selon l'une quelconque des revendications 4 à 6, **caractérisée en ce que** les trois portions de guidage guident la portion cylindrique (2a).

8. La structure de montage pour connecteur rotatif selon l'une quelconque des revendications précédentes, dans laquelle les pattes d'annulation sont prévues aux extrémités respectives d'une portion de patte (2b) formée sur le portion saillante.
